# EUROPÄISCHE PATENTANMELDUNG

(11) **EP 1 092 685 A1**
(43) Veröffentlichungstag der Anmeldung: **18.04.2001**
(21) Anmeldenummer: 00120838.8
(22) Anmeldetag: 25.09.2000
(51) Int. Cl.: C03B 17/04, C03B 23/047

(54) **Verfahren zur Herstellung eines zylindrischen Bauteils aus Quarzglas und Vorrichtung zur Durchführung des Verfahrens**

(30) Priorität: 13.10.1999 DE 19949411
(71) Anmelder: Heraeus Quarzglas GmbH & Co. KG, 63450 Hanau (DE)
(72) Erfinder: Schmitt, Clemens, 63825 Blankenbach (DE); Bräuer, Karsten, 63486 Bruchköbel (DE); Lobeck, Wolfram, 63486 Bruchköbel (DE)

(57) **Zusammenfassung**

Bei einem Verfahren zur Herstellung eines zylindrischen Bauteils (2) aus einer Quarzglasmasse (3) wird der in einer Heizvorrichtung (4) erwärmte und durch eine Austrittsöffnung (5) austretende Bauteil (2) in einer Führungseinheit (6) geführt, die in einem Abstand (G) zur Austrittsöffnung an das zylindrische Bauteil angreift, in dem das Bauteil formstabil ist. Die Führungseinheit (6) hat mehrere einander gegenüberliegend angeordnete und um eine jeweilige Achse (7) drehbare Führungskörper (8, 9). Zum Ausgleich einer Eigenrotation beim Ziehen des zylindrischen Bauteils (2) ist die Führungseinheit (6) um die Längsachse (L) des zylindrischen Bauteils drehbar angeordnet. Eine relative Drehbewegung zwischen dem zylindrischen Bauteil (2) und der Führungseinheit (6) und eine hierdurch verursachte Beeinträchtigung der Oberfläche des zylindrischen Bauteils (2) kann dadurch vermieden werden.

## Beschreibung

Die Erfindung betrifft ein Verfahren zur Herstellung eines zylindrischen Bauteils aus Quarzglas, insbesondere eines Stabes oder Rohres, bei dem eine Quarzglasmasse in einem ersten Schritt in einer Heizvorrichtung erwärmt und anschließend als ein zylindrisches Bauteil durch eine Austrittsöffnung hindurch nach außen abgezogen und von einer Führungseinheit geführt wird. Weiterhin betrifft die Erfindung eine Vorrichtung zur Durchführung des Verfahrens.

Ein Verfahren und eine Vorrichtung der genannten Art werden heute beispielsweise bei der Herstellung von Quarzglasstäben oder Quarzglasrohren eingesetzt. Hierzu wird zunächst ein Quarzglaszylinder oder ein Quarzglasrohr mit einem vergleichsweise großen Durchmesser in die Heizvorrichtung von oben und im wesentlichen senkrecht eingeführt. In der Heizvorrichtung wird der Quarzglaszylinder bzw. das Quarzglasrohr bis auf die Erweichungstemperatur des Quarzglases erwärmt. Die erweichte Quarzglasmasse wird anschließend durch die Austrittsöffnung als Stab oder Rohr nach unten abgezogen. Dabei kann die Austrittsöffnung selbst im Sinne eines Werkzeuges als Profil gebend wirken, in der Regel erfolgt die Formgebung jedoch ohne ein Werkzeug. Allein Prozeßparameter wie Vorschub- bzw. Abzugsgeschwindigkeit, Temperatur und gegebenenfalls der Innendruck bei Rohren bestimmen die Form. Problematisch ist nämlich in der Praxis die Empfindlichkeit des aus der Austrittsöffnung austretenden und auf seine Erweichungstemperatur erwärmten Bauteils gegenüber äußeren Einwirkungen. Dies um so mehr, je höher die Temperatur des austretenden Bauteils ist. Andererseits ist eine Führung notwendig um Geometrieabweichungen zu minimieren. Bereits geringfügige Abweichungen von der Sollbeschaffenheit, insbesondere dein Sollmaß der Querschnittsfläche und der Oberflächenbeschaffenheit, führen nämlich zu einer erheblich eingeschränkten Einsetzbarkeit. Das beschriebene Verfahren zur Herstellung von Quarzglasstäben kann daher insbesondere die hohen Qualitätsansprüche an Stäbe, die als Vorformen für Lichtwellenleiter verwendet werden sollen, im allgemeinen nur eingeschränkt erfüllen.

Vor diesem Hintergrund liegt der Erfindung die Aufgabe zugrunde, ein Verfahren der eingangs genannten Art derart auszuführen, daß hierdurch die Oberflächenqualität derart hergestellter zylindrischer Bauteile oder Stäbe aus einer Quarzglasmasse wesentlich verbessert wird. Weiterhin soll eine Vorrichtung zur Durchführung des Verfahrens geschaffen werden.

Das erstgenannte Problem wird erfindungsgemäß dadurch gelöst, daß das zylindrische Bauteil und die Führungseinheit synchron um die Längsachse des Bauteils rotieren und die Führungseinheit in einem Abstand von der Austrittsöffnung an das zylindrische Bauteil angreift, bei dem das zylindrische Bauteil eine maximale Temperatur im Bereich zwischen 1000°C und 1300°C aufweist. Das bis auf seine Erweichungstemperatur erwärmte und durch die Austrittsöffnung austretende zylindrische Bauteil ist an dem von der Austrittsöffnung beabstandeten Angriffspunkt der Führungseinheit gegen eine mögliche Verformung, die zu einer Abweichung vom Sollmaß führen könnte, wirkungsvoll geschützt, da es hier bereits formstabil ist. Das Bauteil wird derart geführt, daß sowohl eine Abweichung vom Idealverlauf beim Ziehen, die zu einer Biegung des zylindrischen Bauteils führt, vermieden und so eine Zentrierung erreicht wird als auch eine Abweichung von der vorgesehenen Sollbeschaffenheit der Oberfläche des zylindrischen Bauteils verhindert wird. Das aus der Vorrichtung austretende zylindrische Bauteil wird beim Ziehen in eine Drehung um die Längsachse versetzt, wodurch das Bauteil eine wesentlich verbesserte Qualität aufweist. Hierbei verhindert die beispielsweise mit übereinstimmender Drehbewegung angetriebene Führungseinheit eine Relativbewegung zwischen dem zylindrischen Bauteil und der Führungseinheit. Eine Beschädigung der Oberfläche des zylindrischen Bauteils, die anderenfalls am Endprodukt als spiralige Schleifspur erkennbar sein könnte, wird daher zuverlässig ausgeschlossen. Zugleich wird dabei in einfacher Weise eine Zentrierung und eine wesentliche Verringerung einer möglichen Geometrieabweichung des zylindrischen Bauteils erreicht.

Das zweitgenannte Problem, die Schaffung einer Vorrichtung zur Herstellung eines zylindrischen Bauteils aus Quarzglas, insbesondere eines Stabes oder Rohres, mit einer Heizvorrichtung zur Erwärmung einer Quarzglasmasse und mit einer Austrittsöffnung, durch die ein mit einer gewünschten Querschnittsfläche herzustellendes zylindrisches Bauteil austritt, wird erfindungsgemäß dadurch gelöst, dass die Führungseinheit mit zumindest zwei beweglich angeordneten Führungskörpern in einem solchen Abstand von der Austrittsöffnung für das zylindrische Bauteil angeordnet ist, bei dem das zylindrische Bauteil eine maximale Temperatur im Bereich zwischen 1000°C und 1300°C aufweist. Das durch die Austrittsöffnung austretende zylindrische Bauteil wird durch die Führungseinheit zentriert und ohneformgebenden Einfluß geführt. Dadurch werden Abweichungen von der Sollbeschaffenheit der Oberfläche verhindert. Es ist somit möglich, die Temperatur der Quarzglasmasse in der Heizvorrichtung zu erhöhen, da eine unkontrollierte Verformung des Stabes aufgrund äußerer Einwirkungen mittels der Führungseinheit verhindert wird und dabei insbesondere eine Biegung des zylindrischen Bauteil vermieden werden kann. Die Führungskörper sind derart beschaffen, daß sie dem Vortrieb des zylindrischen Bauteils lediglich einen minimalen Widerstand entgegensetzen. Die hierdurch erreichbare Fertigungsqualtität erlaubt so auch eine uneingeschränkte Verwendung des zylindrischen Bauteils als Vorform für Lichtwellenleiter.

Dadurch daß die Führungseinheit um die Längsachse des zylindrischen Bauteils drehbar ausgeführt ist, wird es möglich, auch bei solchen zylindrischen Bauteilen eine optimale Führung zu erreichen, die zur Erhöhung der Fertigungsqualität beim Ziehen in eine Rotation um ihre eigene Längsachse versetzt werden. Eine an diese Rotation angepaßte Drehbewegung der Führungseinheit dient dabei der Vermeidung einer relativen Drehbewegung zwischen dem zylindrischen Bauteil und der Führungseinheit, so daß insbesondere eine Beeinträchtigung der Oberfläche des zylindrischen Bauteils, z.B. eines Stabes, die als spiralige Schleifspur erkennbar ist, verhindert wird. Die Führungseinheit ist hierzu durch einen Antrieb auf die jeweils eingestellte Rotation einstellbar, um so eine von der Führungseinheit unabhängige Einstellung der Verfahrensparameter zu ermöglichen. Bei einer mit einer Kugelführung ausgestatteten Führungskörper können zugleich Drehbewegungen um die Längsachse des zylindrischen Bauteils als auch Vorschubbewegungen des zylindrischen Bauteils bei zugleich erheblich vermindertem Reibungswiderstand ausgeglichen werden. Die Kugelführung liegt hierzu gegen das zylindrische Bauteil unmittelbar an. Auf zusätzliche Bauelement kann daher weitgehend verzichtet werden, so daß der Herstellungsaufwand erheblich reduziert wird.

Der Führungskörper kann auch mit einer Beschichtung versehen sein, die durch einen geringen Reibungskoeffizienten einen verringerten Reibungswiderstand ermöglicht. Eine besonders empfehlenswerte Weiterbildung der Erfindung ist hingegen auch dann gegeben, wenn der Führungskörper ein drehbar gelagerter Rotationskörper ist. Die Widerstand gegenüber der Vorschubbewegung beim Ziehen des zylindrischen Bauteils kann dadurch weiter verringert werden, wobei zugleich eine Beeinträchtigung der Oberfläche, beispielsweise durch Schleifspuren, verhindert wird. Die Fertigungsqualität läßt sich daher weiter verbessern.

Eine andere empfehlenswerte Ausgestaltung der Erfindung wird dadurch erreicht, daß der Führungskörper zum Ausgleich einer Rotation des zylindrischen Bauteils, z.B. eines Stabes, um eine gegenüber der senkrecht zur Längsachse des zylindrischen Bauteils (oder Stabes) geneigten Achse drehbar ausgeführt ist. Die so an die überlagerte Dreh- und Vorschubbewegung des zylindrischen Bauteils angepaßte Schrägstellung der Achse ermöglicht ein Abwälzen des Führungskörpers auf der Oberfläche des zylindrischen Bauteils, ohne daß es dabei zu Schleifspuren an der Oberfläche des Bauteils (Stabes) kommen kann.

Der Führungskörper kann grundsätzlich als ein beliebiger Rotationskörper ausgeführt sein. Eine besonders günstige Abwandlung der erfindungsgemäßen Vorrichtung wird hingegen dann erreicht, wenn der Führungskörper eine drehbar gelagerte Rolle mit einer der Kontur der Querschnittsfläche des zylindrischen Bauteils angepaßten Ausformung aufweist. Die so beispielsweise als eine V-förmige Einkerbung oder konkave Wölbung der Kontaktfläche zwischen der Rolle und dem Bauteil beschaffene Ausformung ermöglicht so eine Kontaktfläche, die am Umfang des zylindrischen Bauteils nicht nur punktförmig sondern zumindest an mehreren Kontaktpunkten oder auch flächig anliegt. Hierdurch wird ein Abgleiten der Rolle von der Oberfläche des zylindrischen Bauteils verhindert und die Genauigkeit der Zentrierung mittels der Führungseinheit wesentlich erhöht.

Eine andere besonders zweckmäßige Ausführungsform der Erfindung ist auch dadurch gegeben, daß der Führungskörper mittels einer Zustellvorrichtung auf verschiedene zylindrische Bauteile mit jeweils unterschiedlicher Querschnittsfläche einstellbar ist. Hierdurch wird bei verschiedenen oder über die Längsachse des zylindrischen Bauteils veränderlichen Querschnittsflächen eine gleichbleibende zuverlässige Kontaktfläche gewährleistet, die eine ausreichende Führung durch die Führungseinheit sicherstellt. Dabei sind auch solche Zustellvorrichtungen realisierbar, die neben einer kreisförmigen Querschnittsfläche auch auf rechteckige, ovale oder beliebig geformte Querschnittsflächen eingestellt werden können, um so eine individuelle Anpassung an verschiedene Bauteilformen zu ermöglichen. Zugleich kann die Zustellvorrichtung mit einer Vorspannung gegenüber der Oberfläche des zylindrischen Bauteils anliegen, um dadurch eine gleichmäßige Arpreßkraft zu erreichen.

Eine beliebige, lediglich durch praktische Erwägungen beschränkte Anzahl von Führungskörpern kann am Umfang des zylindrischen Bauteils gleichverteilt anliegen. Demgegenüber ist eine einfache Ausführung der Erfindung dann erreicht, wenn die zumindest zwei Führungskörper einander gegenüberliegend angeordnet sind. Hierbei wird das zylindrische Bauteil von den einander gegenüberliegend angeordneten Führungskörper eingeschlossen, wobei eine ungleichmäßig auf das zylindrische Bauteil wirkende Anpreßkraft verhindert werden kann. Die beiden Führungskörper können dabei beispielsweise auch auf einem gemeinsamen Schlitten beweglich angeordnet werden oder auch mit Sensoren ausgestattet sein, die eine Differenz der gemessenen Anpreßkraft des jeweiligen Führungskörpers erfassen. Die Zentrierung des zylindrischen Bauteils wird daher erleichtert und eine mögliche Biegung des zylindrischen Bauteils durch eine ungenaue Positionierung der Führungseinheit ausgeschlossen.

Dabei ist eine Weiterbildung der Erfindung dann besonders wirkungsvoll, wenn mehrere paarweise angeordnete Führungskörper zueinander um einen Winkel verdreht am Umfang des zylindrischen Bauteils gleichverteilt angeordnet sind. Hierdurch wird eine zuverlässige Zentrierung durch die am Umfang gleichverteilt angeordneten Führungskörper erreicht, wobei auch im wesentlichen zylindrische Führungskörper eingesetzt werden können. Eine Abweichung von der idealen Vorschubbewegung des zylindrischen Bauteils wird dabei in jedem Fall durch zumindest einen dieser Abweichung entgegenwirkenden Führungskörper ausgeglichen.

Eine ebenfalls besonders empfehlenswerte Weiterbildung der Erfindung ist dann gegeben, wenn mehrere angeordnete Führungskörper in Richtung der Längsachse des zylindrischen Bauteils zueinander mit Abstand angeordnet sind. Durch die so geschaffenen, in Richtung der Längsachse des zylindrischen Bauteils zueinanderbeabstandeten Kontaktpunkte bzw. Kontaktflächen wird eine unerwünschte Biegung des zylindrischen Bauteils verhindert. Dabei wird zugleich eine entlang der Längsachse des zylindrischen Bauteils verteilte Krafteinleitung erreicht, wobei zudem mögliche Zentrierungsfehler der Führungseinheit bezüglich der Austrittsöffnung verhindert weiden können.

Eine andere vorteilhafte Ausgestaltung der Vorrichtung ist dadurch gegeben, daß die Austrittsöffnung der Vorrichtung vertikal unterhalb der Heizvorrichtung angeordnet ist. Hierdurch werden die Einflüsse der Schwerkraft in zweckmäßiger Weise genutzt, um die Zentrierung des zylindrischen Bauteils mit Hilfe der Führungseinheit zu erleichtern. Eine unerwünschte Biegung des zylindrischen Bauteils, verursacht durch dessen Eigengewicht, ist dabei ausgeschlossen.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: in einer teilweise geschnittenen Seitenansicht die erfindungsgemäße Vorrichtung mit einer Führungseinheit.
- Figur 2: die in Figur 1 gezeigte Führungseinheit in einer Draufsicht

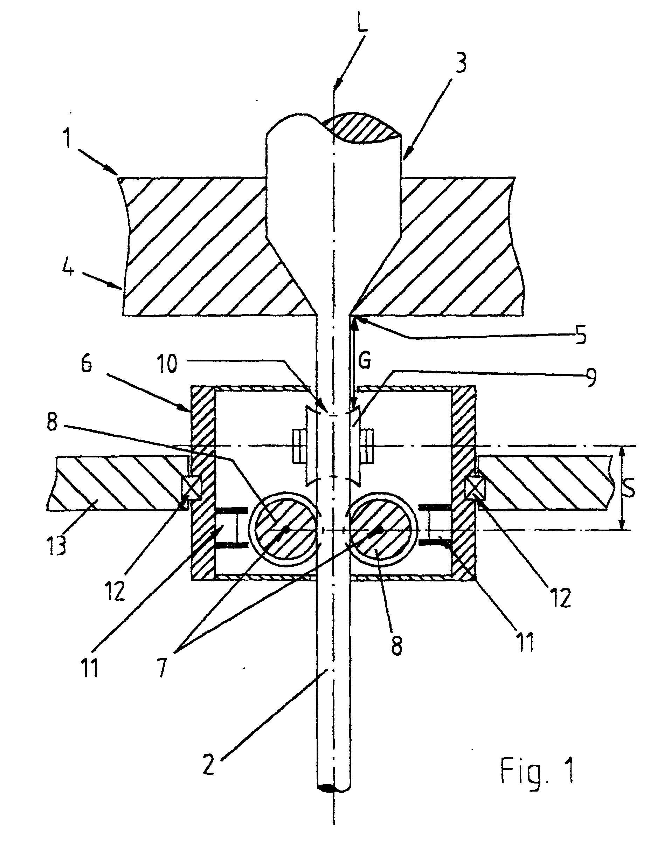

Figur 1 zeigt eine teilweise geschnittene Seitenansicht einer erfindungsgemäßen Vorrichtung 1 zur Herstellung eines dünnen Quarzglasstabes als zylindrisches Bauteil 2. Hierzu wird eine Quarzglasmasse 3 in einer Heizvorrichtung 4 der Vorrichtung 1 auf seine Erweichungstemperatur erwärmt Anschließend wird das Bauteil bzw. der Quarzglasstab 2 durch eine Austrittsöffnung 5 nach unten abgezogen. Unterhalb der Austrittsöffnung 5 ist eine Führungseinheit 6 vorgesehen. Um eine ausreichende Formstabilität des abgezogenen Bauteils 2 zu gewährleisten ist die Führungseinheit 6 mit ihren Führungskörpern 8,9 in einem Abstand G von etwa 340 mm von der Austrittsöffnung 5 entfernt positioniert. Der Quarzglasstab 2 ist bei diesem Abstand auf etwa 600°C abgekühlt. Die in dem Abstand (von der Austrittsöffnung) von etwa 340 mm an das zylindrische Bauteil 2 angreifende Führungseinheit 6 ist mit mehreren um eine jeweilige Achse 7 drehbaren und als Rolle ausgeführten Führungskörpern 8, 9 ausgestattet, die paarweise einander gegenüberliegend angeordnet sind und dabei das zylindrische Bauteil (Stab) 2 einschließen. Zur Verbesserung der Kontaktfläche sind die Führungskörper 8, 9 mit einer an die Querschnittsfläche des zylindrischen Bauteils 2 angepassten konkaven Ausformung 10 versehen, die so zugleich dem Schutz gegen ein unerwünschtes Abgleiten der Führungskörper 8, 9 von dem zylindrischen Bauteil 2 dient. Die paarweise angeordneten Führungskörper 8 bzw. 9 sind zueinander mit einem Abstand s in Richtung der Längsachse L des zylindrischen Bauteils (Stabes) 2 an der Führungseinheit 6 angeordnet, um so einen zusätzlichen Schutz gegen eine mögliche Biegung des zylindrischen Bauteils 2 zu erreichen. Zugleich sind die Führungskörper 8, 9 gegeneinander um einen Winkelα versetzt am Umfang des zylindrischen Bauteils 2 gleichverteilt angeordnet, so daß eine von der Ideallinie abweichende Vorschubbewegung des zylindrischen Bauteils bzw. Stabes 2 durch zumindest einen Führungskörper 8, 9 abgefangen werden kann. Zur Anpassung an unterschiedliche Querschnittsflächen des zylindrischen Bauteils 2 sind die Führungskörper 8, 9 jeweils mit einer Zustellvorrichtung 11 verbunden, die eine Zustellbewegung auf das Bauteil 2 ermöglicht. Die Führungseinheit 6 ist mittels eines Lagers 12 an einer Halterung 13 drehbar gelagert. Daher können Rotationen beim Ziehen des zylindrischen Bauteils 2, die je nach Herstellungsverfahren vorgesehen werden, ausgeglichen werden, indem die Führungseinheit 6 mit übereinstimmender Drehbewegung um die Längsachse L des zylindrischen Bauteils 2 gedreht wird. Hierdurch wird eine relative Drehbewegung zwischen dem Bauteil 2 und der Führungseinheit 6 sowie eine dadurch möglicherweise verursachte Beeinträchtigung der Oberfläche des zylindrischen Bauteils 2, insbesondere durch Schleifspuren, ausgeschlossen.

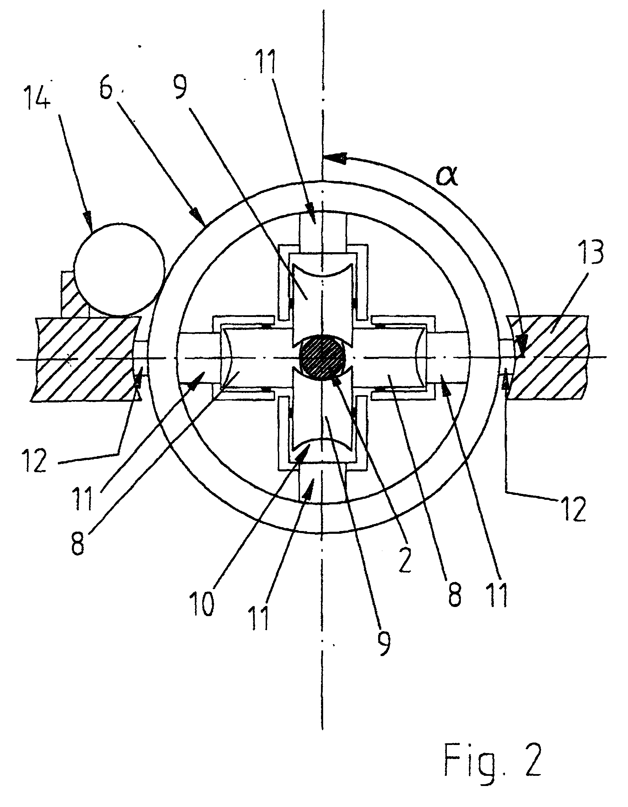

Die Führungseinheit 6 ist ergänzend in Figur 2 in einer Draufsicht dargestellt. Zu erkennen sind die paarweise einander gegenüberliegend angeordneten und als Rollen ausgeführten Führungskörper 8, 9, die jeweils mittels einer Zustellvorrichtung 11 an der Führungseinheit 6 fixiert sind. Die Führungskörper 8, 9 sind dabei über den Umfang des zylindrischen Bauteils 2 gleichverteilt um einen Winkel α versetzt angeordnet. Hierdurch wird die optimale Zentrierung des zylindrischen Bauteils 2 ermöglicht, ohne jedoch die Oberflächenqualität des zylindrischen Bauteils zu beeinträchtigen. Die konkave Ausformung 10 der jeweiligen Führungskörper 8, 9 an der Kontaktfläche zu dem zylindrischen Bauteil 2 verhindert zusätzlich ein Abgleiten. Die Führungseinheit 6 ist dabei zur mühelosen Einfassung des zylindrischen Bauteils 2 rücksetzbar ausgeführt. Weiterhin ist die Führungseinheit 6 mittels des Lagers 12 an der Halterung 13 drehbar gelagert und mittels eines Antriebes 14 entsprechend der Rotation des zylindrischen Bauteils 2 antreibbar, so daß eine relative Drehbewegung zwischen dem zylindrischen Bauteil 2 und der Führungseinheit 6 ausgeschlossen werden kann.

## Patentansprüche

1. Verfahren zur Herstellung eines zylindrischen Bauteils aus Quarzglas, insbesondere eines Stabes oder Rohres, bei dem eine Quarzglasmasse in einem ersten Schritt in einer Heizvorrichtung erwärmt und anschließend als ein zylindrisches Bauteil durch eine Austrittsöffnung hindurch nach außen abgezogen und von einer Führungseinheit geführt wird, **dadurch gekennzeichnet**, dass das zylindrische Bauteil (2) und die Führungseinheit (6) synchron um die Längsachse (L) des Bauteils (2) rotieren und die Führungseinheit (6) in einem Abstand (G) von der Austrittsöffnung (5) an das zylindrische Bauteil (2) angreift, bei dem das zylindrische Bauteil (2) eine maximale Temperatur im Bereich zwischen 1000°C und 1300°C aufweist

2. Vorrichtung zur Herstellung eines zylindrischen Bauteils aus Quarzglas, insbesondere eines Stabes oder Rohres, mit einer Heizvorrichtung zur Erwärmung einer Quarzglasmasse und mit einer Austrittsöffnung, durch die ein mit einer gewünschten Querschnittsfläche herzustellendes zylindrisches Bauteil austritt, **dadurch gekennzeichnet**, dass die Führungseinheit (6) mit zumindest zwei beweglich angeordneten Führungskörpern (8, 9) in einem solchen Abstand (G) von der Austrittsöffnung (5) für das zylindrische Bauteil (2) angeordnet ist, bei dem das zylindrische Bauteil (2) eine maximale Temperatur im Bereich zwischen 1000°C und 1300°C aufweist.

3. Vorrichtung nach Anspruch 2, **dadurch gekennzeichnet**, daß der Führungskörper (8, 9) ein drehbar gelagerter Rotationskörper ist.

4. Vorrichtung nach Anspruch 3, **dadurch gekennzeichnet**, daß der Führungskörper zum Ausgleich einer Rotation des zylindrischen Bauteils (2) um eine gegenüber der senkrecht zur Längsachse (L) des zylindrischen Bauteils (2) geneigte Achse (7) drehbar ausgeführt ist.

5. Vorrichtung nach Anspruch 4, **dadurch gekennzeichnet**, daß der Führungskörper (8, 9) eine drehbar gelagerte Rolle mit einer der Kontur der Querschnittsfläche des zylindrischen Bauteils (2) angepaßten Ausformung (10) aufweist.

6. Vorrichtung nach zumindest einem der Ansprüche 2 bis 5, **dadurch gekennzeichnet**, daß der Führungskörper (8, 9) mittels einer Zustellvorrichtung (11) auf verschiedene zylindrische Bauteile (2) mit jeweils unterschiedlicher Querschnittsfläche einstellbar ist

7. Vorrichtung nach zumindest einem der Ansprüche 2 bis 6, **dadurch gekennzeichnet**, daß die zumindest zwei Führungskörper (8, 9) einander gegenüberliegend angeordnet sind.

8. Vorrichtung nach Anspruch 7, **dadurch gekennzeichnet**, daß mehrere paarweise angeordnete Führungskörper (8, 9) zueinander um einen Winkel (α) verdreht am Umfang des zylindrischen Bauteils (2) gleichverteilt angeordnet sind.

9. Vorrichtung nach Anspruch 7 oder 8, **dadurch gekennzeichnet**, daß mehrere Führungskörper (8, 9) in Richtung der Längsachse (L) des zylindrischen Bauteils (2) zueinander mit Abstand (s) angeordnet sind.

10. Vorrichtung nach zumindest einem der Ansprüche 2 bis 9, **dadurch gekennzeichnet**, daß die Austrittsöffnung (5) der Vorrichtung (1) vertikal unterhalb der Heizvorrichtung (4) angeordnet ist.
